# EUROPÄISCHE PATENTANMELDUNG

(11) **EP 4 262 045 A1**
(43) Veröffentlichungstag der Anmeldung: **18.10.2023**
(21) Anmeldenummer: 22168193.5
(22) Anmeldetag: 13.04.2022
(51) Int. Cl.: H02J 7/00

(54) **BATTERIELADEMANAGEMENTSYSTEM UND BATTERIELADEMANAGEMENTVERFAHREN**

(71) Anmelder: Andreas Stihl AG & Co. KG, 71336 Waiblingen (DE)
(72) Erfinder: Wegmann, Raphael, 71229 Leonberg (DE); Koch, Friedhelm, 71573 Allmersbach im Tal (DE); Sämann, Christian, 70372 Stuttgart (DE)
(74) Vertreter: Patentanwälte Ruff, Wilhelm, Beier, Dauster & Partner mbB

(57) **Zusammenfassung**

1. Batterielademanagementsystem und Batterielademanagementverfahren.
2.1. Die Erfindung bezieht sich auf ein Batterielademanagementsystem für eine Batterieflotte (1) mit einer Mehrzahl von wiederaufladbaren, kommunikationsfähigen Batterieeinheiten (B₁, ..., Bₙ) und auf ein entsprechendes Batterielademanagementverfahren.
2.2. Erfindungsgemäß umfasst das System eine Lademanagementbasis (3), die zum Senden von Ladeeinstellinformationen für die Batterieeinheiten eingerichtet ist, eine Mehrzahl von Nutzerendgeräten (4₁, ..., 4ₘ), die zum Senden von batterieladebezogenen Nutzervorgabeinformationen eingerichtet sind, je eine Ladesteuereinheit (2) in jeder der Batterieeinheiten und eine Kommunikationsverbindung (5) zur Datenübertragung zwischen der Lademanagementbasis (3) einerseits und den Batterieeinheiten andererseits sowie zwischen den Nutzerendgeräten einerseits und der Lademanagementbasis und/oder den Batterieeinheiten andererseits. Die Ladeeinstellinformationen und/oder die Nutzervorgabeinformationen umfassen Lademodusinformationen bezüglich einer Mehrzahl unterschiedlicher Lademodi für die Batterieeinheiten. Die Ladeeinstellinformationen und/oder die Nutzervorgabeinformationen sind der Ladesteuereinheit in der jeweiligen Batterieeinheit über die Kommunikationsverbindung zuführbar. Die jeweilige Ladesteuereinheit ist dafür eingerichtet, zur Durchführung eines Ladevorgangs ihrer an ein Ladegerät angekoppelten Batterieeinheit zugehörige Ladeparameter-Sollwertinformationen in Abhängigkeit von den zugeführten Ladeeinstellinformationen und/oder Nutzervorgabeinformationen festzulegen und an das Ladegerät zu übermitteln.
2.3. Verwendung z.B. für Akkupacks zur Energieversorgung von handgeführten Garten-, Forst-, Bau- und/oder Bodenbearbeitungsgeräten.

## Beschreibung

Die Erfindung bezieht sich auf ein Batterielademanagementsystem für eine Batterieflotte mit einer Mehrzahl von wiederaufladbaren, kommunikationsfähigen Batterieeinheiten und auf ein entsprechendes Batterielademanagementverfahren, wobei das Batterielademanagementsystem eine Lademanagementbasis umfasst, die zum Senden von Ladeeinstellinformationen für die Batterieeinheiten eingerichtet ist.

Systeme und Verfahren dieser Art dienen dem Lademanagement für die elektrisch wiederaufladbaren Batterieeinheiten, was insbesondere entsprechende Maßnahmen zur Einstellung, Steuerung und Durchführung elektrischer Ladevorgänge für die Batterieeinheiten umfasst. Die Batterieeinheiten sind zu der Batterieflotte zusammengefasst, d.h. zu einer Gesamtheit, aus der sich ein oder mehrere Nutzer bedienen können, um sich eine jeweilige Batterieeinheit für einen beabsichtigten Einsatzzweck zu beschaffen. Die Batterieeinheiten können gleicher oder unterschiedlicher Bauart bzw. gleichen oder unterschiedlichen Typs sein und beispielsweise als sogenannte Akkupacks realisiert sein, wie sie üblicherweise zur Energieversorgung von diversen elektrisch angetriebenen Geräten benutzt werden. Bei diesen Geräten kann es sich z.B. um handgeführte Arbeitsgeräte, wie handgetragene oder bodengetragene Arbeitsgeräte bzw. Bearbeitungsgeräte im Bau- und Heimwerkerbereich, im Gartenbau und in der Forstwirtschaft handeln.

Es sind bereits diverse Batterielademanagementsysteme dieser und ähnlicher Art und von diesen durchführbare Batterielademanagementverfahren gebräuchlich, wobei die Lademanagementmaßnahmen von Typ Art und Einsatzbedarf der Batterieeinheiten und weiteren Parametern abhängen können, die Einfluss auf den Ladezustand und die Durchführung der Ladevorgänge haben. Ein solcher, häufig berücksichtigter Einflussparameter ist die Batterietemperatur, siehe z.B. die Patentschrift EP 2 879 227 B1. Batterielademanagementsysteme der vorliegend betrachteten Art verfügen über ausreichend Systemintelligenz, insbesondere Batterieladeintellligenz, im Sinn einer entsprechenden Rechner-/Computerintelligenz, um die gewünschten Lademaßnahmen zu ermitteln und zu initiieren bzw. zu steuern. Meist ist diese Systemintelligenz bei herkömmlichen Systemen vollständig oder überwiegend in der Lademanagementbasis implementiert, z.B. in einer als Server-Rechner bzw. kurz Server ausgeführten Lademanagementbasis und/oder in einer oder mehreren Ladestationen bzw. Ladegeräten des Systems.

Die Offenlegungsschrift EP 3 506 456 A1 offenbart ein Batterielademanagementsystem der eingangs genannten Art, bei dem die Lademanagementbasis einen Server umfasst, der Ladebedarfsanforderungen und batterieindividuelle Batteriezustandsinformationen, wie bzgl. Typ, Herstelldatum, Kapazität, Alterungszustand, Ladezustand und Batterietemperatur, von einer Batterieaustauschstation empfängt, in der die Batterieeinheiten der Batterieflotte, die jeweils über ein Batteriemanagementsystem verfügen, positioniert werden können. Der Server erstellt daraus batterieindividuelle oder typ- bzw. gruppenindividuelle Ladepläne und übermittelt entsprechende Ladebefehle an die Batterieaustauschstation. Der Server soll dabei auch die Fähigkeit besitzen, quasi in Echtzeit maßgeschneiderte Batterieladeverläufe zu ermitteln und die Batterieaustauschstation zur entsprechenden Durchführung des Ladevorgangs anzuleiten. Das von diesem System ausführbare Batterielademanagementverfahren beinhaltet u.a. die Möglichkeit einer Justin-time-Einstellung des Ladeverlaufs, bei der ein langsameres Laden für Zeiträume priorisiert wird, in denen kein Bedarf zur Nutzung der Batterieeinheit erwartet wird oder die Ladekosten niedrigerer sind, und auf ein schnelleres Laden gewechselt wird, sobald ein prognostizierter Bedarf erkannt wird, um die Batterieeinheit vor der Nutzung vollständig zu laden.

Die Patentschrift EP 2 457 302 B1 offenbart die Maßnahme, für die Durchführung des Ladevorgangs für eine Batterie z.B. in einem Smartphone aus verschiedenen vorgegebenen Ladeprofilen das aktuell zu benutzende Ladeprofil abhängig von Start- und/oder Endzeitpunkt und/oder der Ladedauer auszuwählen, wobei insbesondere ein Ladeprofil zum Laden der Batterie mit geringerer Leistung für Ladezeiträume priorisiert wird, in denen keine aktive Nutzung des von der Batterie gespeisten Gerätes erwartet wird, um die Lebensdauer der Batterie zu verlängern, und ein Ladeprofil zum Laden der Batterie mit höherer Leistung für Ladezeiträume gewählt wird, in denen mit einer baldigen Nutzung des Gerätes zu rechnen ist, um die Ladedauer zu verkürzen.

Die Patentschrift EP 3 413 424 B1 offenbart die Maßnahme, den Energiebedarf einer Batterieeinheit für einen anstehenden Arbeitseinsatz zu ermitteln und für die Batterieeinheiten der Batterieflotte eine Ladedauerprognose zu erstellen und damit die Batterieeinheit mit der kürzesten prognostizierten Ladedauer herauszufinden.

Die Offenlegungsschrift EP 2 418 749 A1 offenbart ein Lademanagement, das z.B. für Batterieeinheiten im Smart-Home-Bereich gedacht ist und die Maßnahme beinhaltet, Ladevorgänge zu priorisieren, für die regenerativ erzeugte elektrische Energie verfügbar ist, um CO₂-Emissionen gering zu halten.

Der Erfindung liegt als technisches Problem die Bereitstellung eines Batterielademanagementsystems und eines Batterielademanagementverfahrens der eingangs genannten Art zugrunde, die gegenüber dem oben erwähnten Stand der Technik weitergehende Verbesserungen des Batterielademanagements bieten.

Die Erfindung löst dieses Problem durch die Bereitstellung eines Batterielademanagementsystems mit den Merkmalen des Anspruchs 1 und eines Batterielademanagementverfahrens mit den Merkmalen des Anspruchs 11. Vorteilhafte Weiterbildungen der Erfindung sind in den Unteransprüchen angegeben, deren Wortlaut hiermit durch Verweis zum Bestandteil der Beschreibung gemacht wird. Dies schließt insbesondere auch alle Ausführungsformen der Erfindung ein, die sich aus den Merkmalskombinationen ergeben, die durch die Rückbezüge in den Unteransprüchen definiert sind.

Das erfindungsgemäße Batterielademanagementsystem umfasst eine Lademanagementbasis, die zum Senden von Ladeeinstellinformationen für die Batterieeinheiten eingerichtet ist, eine Mehrzahl von Nutzerendgeräten, die zum Senden von batterieladebezogenen Nutzervorgabeinformationen eingerichtet sind, je eine Ladesteuereinheit in jeder der Batterieeinheiten und eine Kommunikationsverbindung zur Datenübertragung zwischen der Lademanagementbasis einerseits und den Batterieeinheiten andererseits und zwischen den Nutzerendgeräten einerseits und der Lademanagementbasis und/oder den Batterieeinheiten andererseits. Es versteht sich, dass die Lademanagementbasis und/oder die Nutzerendgeräte je nach Bedarf und Anwendungsfall weitere implementierte Funktionalitäten aufweisen können, insbesondere auch solche, wie sie vorliegend an anderer Stelle genannt oder dem Fachmann von herkömmlichen Komponenten dieser Art an sich bekannt sind.

Die Ladeeinstellinformationen und/oder die Nutzervorgabeinformationen umfassen Lademodusinformationen bezüglich einer Mehrzahl unterschiedlicher Lademodi für die Batterieeinheiten. Über die Kommunikationsverbindung sind der Ladesteuereinheit in der jeweiligen Batterieeinheit die Ladeeinstellinformationen von der Lademanagementbasis und/oder die Nutzervorgabeinformationen von den Nutzerendgeräten zuführbar. Je nach Systemrealisierung bestehen die Ladeeinstellinformationen bzw. die Nutzervorgabeinformationen einzig aus den Lademodusinformationen oder enthalten zusätzliche batterieladebezogene Informationen. In jedem Fall erhält die jeweilige Ladesteuereinheit dadurch Kenntnis von einem gewünschten bzw. angeforderten Lademodus, ggf. ergänzt durch weitere laderelevante Informationen. Bevorzugt werden die Ladeeinstellinformationen in der Lademanagementbasis vorgehalten, indem sie dort geeignet gespeichert sind. Die Nutzervorgabeinformationen können im jeweiligen Nutzerendgerät vorgehalten, d.h. abgespeichert, sein und vom Benutzer zum Senden an die Lademanagementbasis und/oder die jeweilige Ladesteuereinheit ausgewählt werden, und/oder sie können vom Benutzer zum Senden an die Lademanagementbasis und/oder die jeweilige Ladesteuereinheit am Nutzerendgerät eingegeben werden.

Die jeweilige Ladesteuereinheit ist dafür eingerichtet, zur Durchführung eines Ladevorgangs ihrer an ein Ladegerät angekoppelten Batterieeinheit zugehörige Ladeparameter-Sollwertinformationen in Abhängigkeit von den zugeführten Ladeeinstellinformationen und/oder Nutzervorgabeinformationen und damit insbesondere in Abhängigkeit von den darin enthaltenen Lademodusinformationen festzulegen und an das Ladegerät zu übermitteln. Die für das System benötigte System intelligenz kann daher großteils in den Ladesteuereinheiten und folglich in den Batterieeinheiten implementiert sein. Damit können sowohl das oder die Ladegeräte als auch die Lademanagementbasis von entsprechenden Systemintelligenzimplementierungen entlastet und auf die Erfüllung anderer Funktionen, wie die für das Lademanagement der Flotte benötigten Kommunikationsfunktionen, hin optimiert bzw. auf diese fokussiert werden.

Das derart ausgelegte, erfindungsgemäße Batterielademanagementsystem ermöglicht es in einfacher und optimaler Weise, Ladevorgänge für die Batterieeinheiten der Flotte zu ermitteln und durchzuführen. Der Nutzer kann bei Bedarf über sein Nutzerendgerät einen gewünschten Lademodus und optional weitere Ladevorgaben für eine ausgewählte oder eine beliebige der Batterieeinheiten, z.B. auch Informationen über eine beabsichtigte Einsatzzeit und/oder einen beabsichtigten Einsatzzweck, als Nutzervorgabeinformationen vorgeben bzw. an die Lademanagementbasis und/oder die jeweilige Ladesteuereinheit übermitteln. Die jeweilige Ladesteuereinheit in der betreffenden Batterieeinheit ist durch die in ihr implementierte Ladeintelligenz in der Lage zu ermitteln, ob der vom Benutzer gewünschte Lademodus auch unter Berücksichtigung anderweitiger Gegebenheiten momentan optimal ist oder alternativ einem anderen Lademodus der Vorzug zu geben ist, z.B. unter Berücksichtigung einer ermittelten voraussichtlichen Ladedauer und/oder eines erfassten Lade- und/oder Alterungszustands der Batterieeinheit und/oder eines mitgeteilten Einsatzzeitpunktes und/oder Einsatzzweckes der Batterieeinheit und/oder einer ermittelten bzw. erfassten Batterietemperatur und/oder unter Berücksichtigung von Nachhaltigkeitsaspekten und/oder Ladestromkostenaspekten. Die Ladesteuereinheiten können bei Bedarf auch selbsttätig, d.h. ohne aktuelle Nutzeranforderung, Ladevorgänge für ihre Batterieeinheiten initiieren, um die gesamte Batterieflotte optimal einsatzbereit zu halten. In jedem Fall leitet die jeweilige Ladesteuereinheit dann das den Ladestrom bzw. die Ladespannung bereitstellende Ladegerät zur Durchführung des als optimal ermittelten Ladevorgangs an, indem es die entsprechenden Ladeparameter-Sollwertinformationen an das Ladegerät übermittelt.

Das Festlegen der Ladeparameter-Sollwerte durch die Ladesteuereinheit in jeder Batterieeinheit und das Übermitteln zum Ladegerät ermöglicht ein Kontrollieren des Ladevorgangs jeder Batterieeinheit unabhängig von dem jeweils verwendeten Ladegerät. Dies kann auch die Benutzung unterschiedlicher Typen von Ladegeräten ermöglichen, mit denen die Batterieeinheiten elektrisch verbunden werden können. Es kann bei Bedarf auch vorgesehen sein, dass eine jeweilige Batterieeinheit durch mehrere sequentielle Ladevorgänge mit gleichen oder verschiedenen Ladeparametern unter Verwendung des gleichen oder von verschiedenenen Ladegeräten geladen wird. Die Kommunikationsverbindung ermöglicht ein Übertragen der Ladeeinstellinformationen, einschließlich der Lademodusinformationen, und der Nutzervorgabeinformationen sowie je nach Bedarf von für Ladevorgänge relevanten Batteriezustandsdaten aller Art, so dass die betreffenden Informationen bzw. Daten in einer jeweils gewünschten Weise an einem gewünschten Speicherort gespeichert und/oder durch eine hierfür vorgesehene Auswerteeinheit z.B. in der jeweiligen Ladesteuereinheit oder dem jeweiligen Nutzerendgerät oder der Lademanagementbasis ausgewertet bzw. weiterverarbeitet werden können.

Die Kommunikationsverbindung ist vorzugsweise eine herkömmliche drahtlose Kommunikationsverbindung und kann insbesondere eine Bluetooth-, LTE-, WiFi-, Zigbee-, GSM-, LAN- oder ähnliche Verbindung sein. Sie kann die kommunikative Verbindung zwischen jeweiliger Batterieeinheit, Lademanagementbasis und jeweiligem Nutzerendgerät direkt ohne Zwischenschaltung anderweitiger Kommunikationskomponenten oder indirekt bereitstellen, d.h. unter Zwischenschaltung einer oder mehrerer anderer Kommunikationskomponenten, wie eines Gateways oder dgl. Dabei kann die Kommunikationsverbindung einteilig oder mehrteilig, insbesondere bestehend aus mehreren verschiedenen Kommunikationskanälen, ausgeführt sein. In letzterem Fall kann sie beispielsweise einen oder mehrere Bluetooth-Kanäle und einen oder mehrere Internetverbindungkanäle wie LTE- oder WiFi-Kanäle beinhalten, einschließlich etwaiger entsprechender Transfereinheiten wie Gateways, die zwischen den verschiedenen Kanälen vermitteln. Die Datenübertragung kann in einer beliebigen herkömmlichen Weise erfolgen, z.B. sequenziell oder als Datenpakete und/oder zyklisch. Daten können an eine oder mehrere der Batterieeinheiten gleichzeitig oder aufeinanderfolgend übertragen werden.

Die Lademanagementbasis kann z.B. einen Server, eine Datenbank, eine Cloud-Basis oder dgl. beinhalten.

Das jeweilige Nutzerendgerät kann z.B. einen Computer oder ein mobiles Gerät wie ein Smartphone, ein Tablet, eine Smartwatch oder dgl. beinhalten.

In einer Weiterbildung der Erfindung sind die Batterieeinheiten als Akkupacks zur Energieversorgung von handgeführten Arbeitsgeräten, insbesondere von handgeführten Garten-, Forst-, Bau- und/oder Bodenbearbeitungsgeräten, ausgeführt. Dies können z.B. Rasenmäher, Hochentaster, Heckenschere, Motorsäge, Trennschleifer usw. sein. Alternativ können die Batterieeinheiten zur Energieversorgung anderer Geräte bzw. Maschinen dienen, z.B. für autonome Bodenbearbeitungsgeräte, wie Mähroboter, oder Elektrofahrzeuge, wie E-Bikes.

In einer Weiterbildung der Erfindung ist jeder Batterieeinheit eine Identifikatorinformation zuweisbar, und die Nutzerendgeräte und/oder die Lademanagementbasis sind/ist zur Gruppierung der Batterieeinheiten in eine oder mehrere Gleichladegruppen unter Verwendung der Identifikatorinformationen eingerichtet. Unter einer Gleichladegruppe ist hierbei vorliegend eine Gruppe zu verstehen, die eine oder mehrere der Batterieeinheiten umfasst, die in Bezug auf das Batterielademanagementsystem unter sich gleichartig bzw. austauschbar für einen bestimmten Einsatzzweck und/oder zur Energieversorgung eines zugeordneten Geräte- bzw. Maschinenteams oder Geräte- bzw. Maschinenparks verwendbar und hierfür aufladbar sind. Dies stellt eine vorteilhafte Aufteilbarkeit der Batterieflotte in Gruppen von Batterieeinheiten zur Verfügung, von denen jede z.B. einem bestimmten Einsatzteam zugeordnet sein kann, wie einem Forstteam für Waldarbeiten und/oder einem Mähteam für Mäharbeiten etc. Es ist dabei auch möglich, eine entsprechende Batterieeinheit mehreren verschiedenen Einsatzteams zuzuordnen. Alternativ kann auf eine solche Gruppenaufteilbarkeit der Batterieflotte verzichtet werden.

In einer Weiterbildung der Erfindung umfassen die Lademodi mehrere von einem Nicht-Lademodus, einem Normal-Lademodus, einem Schnell-Lademodus, einem Schonend-Lademodus und einem Nachhaltig-Lademodus, und die Lademanagementbasis und/oder die Nutzerendgeräte und/oder die Ladesteuereinheiten ist/sind dafür eingerichtet, die Lademodusinformationen und/oder die Ladeparameter-Sollwertinformationen in Abhängigkeit von Priorisierungsinformationen und/oder Nutzungshistorieinformationen festzulegen.

Als Nicht-Lademodus wird vorliegend verstanden, dass die Batterieeinheit im zugehörigen Zeitraum nicht geladen wird. Der Normal-Lademodus stellt eine Referenz dar, auf den sich die anderen Lademodi vergeichend beziehen. Durch den Schonend-Lademodus kann die Batterieeinheit im Vergleich zum Normal-Lademodus über einen längeren zur Verfügung stehenden Zeitraum hinweg sehr schonend geladen werden, was einer hohen Lebensdauer der Batterieeinheit zugute kommt. Durch den Schnell-Lademodus kann sichergestellt werden, dass die Batterieeinheit in relativ kurzer Zeit vollgeladen oder zumindest auf einen erforderlichen Ladestand gebracht werden kann, wenn sie demnächst genutzt werden soll. Der Nachhaltig-Lademodus ermöglicht ein hinsichtlich Nachhaltigkeitsaspekten optimiertes Aufladen der Batterieeinheiten.

Die Priorisierungsinformationen können z.B. Batterielebensdauer-, Einsatzzeit-, Ladekosten- und/oder Nachhaltigkeitsaspekte berücksichtigen. Die Nutzungshistorieinformationen können z.B. typische Einsatzzeiträume bzw. Nichtbenutzungszeiträume der Batterieeinheiten berücksichtigen, wie sie vom System anhand entsprechender Daten über die Nutzung der Batterieeinheit in der Vergangenheit ermittelt werden können. Diese Weiterbildung trägt daher vorteilhaft dazu bei, den für die jeweilige Situation bestmöglichen Ladevorgang aufzufinden bzw. festzulegen. Alternativ können z.B. Algorithmen ohne Priorisierungs- und Nutzungshistorieinformationen zur Festlegung des jeweils aktuellen Ladevorgangs benutzt werden, wenn dies für den betreffenden Anwendungsfall ausreicht.

In einer Ausgestaltung der Erfindung umfassen die Nutzungshistorieinformationen Informationen über einen Nichtnutzungszeitraum, und die Priorisierungsinformationen umfassen eine Priorisierung des Schonend-Lademodus für den Nichtnutzungszeitraum. Dadurch ist das System vorteilhaft in der Lage, selbsttätig ein schonendes, die Lebensdauer der Batterieeinheit verlängerndes Laden der Batterieeinheit in entsprechenden Zeiträumen voreinzustellen. Alternativ kann eine Priorisierung des Schonend-Lademodus entfallen oder von anderen Bedingungen abhängig gemacht werden.

In einer Ausgestaltung der Erfindung umfassen die Nutzungshistorieinformationen Informationen über einen erwarteten Nutzungsstartzeitpunkt, und die Priorisierungsinformationen umfassen eine Priorisierung des Schnell-Lademodus in Abhängigkeit von dem erwarteten Nutzungsstartzeitpunkt. Dadurch ist das System vorteilhaft in der Lage, selbsttätig ein schnelles Laden der Batterieeinheit voreinzustellen, damit diese zum erwarteten Zeitpunkt ihres Einsatzes ausreichend geladen ist. Alternativ kann eine Priorisierung des Schnell-Lademodus entfallen oder von anderen Bedingungen abhängig gemacht werden. Die Priorisierungsinformationen können in einer entsprechenden Realisierung allgemein eine Priorisierung eines abhängig vom erwarteten Nutzungsstartzeitpunkt und dem aktuellen Zustand der Batterieeinheit als bestpassend ermittelten Lademodus beinhalten, um einerseits die Batterieeinheit möglichst schonend zu laden und andererseits zum Einsatzzeitpunkt genügend Batteriekapazität für den bevorstehenden Nutzungsvorgang verfügbar zu haben.

In einer Ausgestaltung der Erfindung umfassen die Nutzervorgabeinformationen Informationen über einen angeforderten Nutzungsstartzeitpunkt, und die Nutzerendgeräte und/oder die Lademanagementbasis und/oder die Ladesteuereinheiten ist/sind dafür eingerichtet, die Lademodusinformationen und/oder die Ladeparameter-Sollwertinformationen in Abhängigkeit vom angeforderten Nutzungsstartzeitpunkt festzulegen. Diese Maßnahme ermöglicht vorteilhaft ein optimales Ziel-Zeit-Laden, bei dem das System, insbesondere die jeweilige Ladesteuereinheit, unter Kenntnis des Einsatzzeitpunktes und des Zustands ihrer Batterieeinheit einen für die Batterieeinheit optimalen Ladevorgang festlegen und initiieren kann, so dass diese einerseits zum gewünschten Zeitpunkt den erforderlichen Ladezustand erreicht hat und andererseits das Aufladen unter optimierender Berücksichtigung der laderelevanten Parameter erfolgt. Alternativ kann das System in vereinfachten Ausführungen ohne diese einsatzzeitpunktabhängige Ladevorgangsoptimierung auskommen.

In einer Weiterbildung der Erfindung ist die jeweilige Ladesteuereinheit zur Erfassung wenigstens eines laderelevanten Batteriezustandsparameters ihrer Batterieeinheit und zur Festlegung der Ladeparameter-Sollwertinformationen für die betreffende Batterieeinheit in Abhängigkeit von den erfassten Werten des wenigstens einen Batteriezustandsparameters eingerichtet. Dies ermöglicht vorteilhaft die Optimierung des jeweiligen Ladevorgangs unter Berücksichtigung des Zustands der betreffenden Batterieeinheit, z.B. ihres Typs, ihrer Temperatur und/oder ihres Alterungszustands. Bei Bedarf können die erfassten Batteriezustandsdaten abgespeichert und/oder anderweitig ausgewertet und/oder von der Ladesteuereinheit ausgegeben bzw. angezeigt und/oder zu den Nutzerendgeräten und/oder zur Lademanagementbasis übertragen werden. Alternativ kann das System in einer vereinfachten Ausführung die Ladeparameter-Sollwertinformationen ohne Berücksichtigung erfasster Batteriezustandsparameter festlegen, wenn dies für den betreffenden Anwendungsfall ausreicht.

In einer Weiterbildung der Erfindung umfassen die Ladeparameter-Sollwertinformationen unterschiedliche Ladestrom- und/oder Ladespannungs-Sollwertvorgaben für mindestens fünf unterschiedliche Batterietemperaturbereiche, wobei die Ladeparameter-Sollwertinformationen unterhalb einer Minimaltemperatur und oberhalb einer Maximaltemperatur den Nicht-Lademodus vorgegeben, für eine an die Minimaltemperatur angrenzende Folge von mindestens zwei Batterietemperaturbereichen einen sukzessiv höheren Ladestrom und/oder eine sukzessiv höhere Ladespannung vorgegeben und für eine an die Maximaltemperatur angrenzende Folge von mindestens zwei Batterietemperaturbereichen einen gleichbleibenden oder sukzessiv geringeren Ladestrom und/oder eine gleichbleibende oder sukzessiv geringere Ladespannung vorgegeben. Diese temperaturabhängig variable Festlegung des Ladevorgangs kann vorteilhaft zu einer Verlängerung der Lebensdauer der Batterieeinheit beitragen, und ein übermäßiges Ansteigen der Batterietemperatur lässt sich verhindern, ohne dass diese hierzu zwangsweise laufend überwacht werden muss. Alternativ kann auf eine solche temperaturabhängige Vorabfestlegung von Ladestrom- und/oder Ladespannungs-Sollwertvorgaben verzichtet werden und eine Echtzeitreaktion auf eine laufend ermittelte Batterietemperaturinformation implementiert werden, oder die Vorgabe beinhaltet nur vier oder weniger unterschiedliche Batterietemperaturbereiche.

In einer Weiterbildung der Erfindung beinhalten die Ladeeinstellinformationen und/oder die Nutzervorgabeinformationen wenigstens eine von einer Ziel-Batteriekapazitätsinformation, einer Ziel-Batterieenergieinformation, einer Ziel-Batteriespannungsinformation und einer Ziel-Batterieeinsatzdauerinformation. Bei Kenntnis der Ziel-Batteriekapazitätsinformation ist die Ladesteuereinheit in der Lage, die betreffende Batterieeinheit gezielt bis zu einer dadurch als Ziel vorgegebenen Batteriekapazität zu laden, z.B. auf einen für die Lagerung der Batterieeinheit optimalen Lagerungs-Kapazitätswert, der z.B. im Bereich zwischen 75% und 85% der vollen Batteriekapazität liegen kann. Eine Kenntnis der Ziel-Batterieenergieinformation kann die Ladesteuereinheit in die Lage versetzen, die betreffende Batterieeinheit gezielt so weit aufzuladen, bis sie eine gewünschte, als Ziel vorgegebene Energiemenge gespeichert hat, die z.B. für einen bevorstehenden Arbeitseinsatz voraussichtlich benötigt wird. Die Vorgabe einer bestimmten Ziel-Batteriespannung kann für die Ladesteuereinheit nützlich sein, um die betreffende Batterieeinheit gezielt bis zu der dadurch gewünschten Batteriespannung aufzuladen. Eine Kenntnis der Ziel-Batterieeinsatzdauerinformation ermöglicht es der Ladesteuereinheit, die Batterieeinheit gezielt so weit aufzuladen, dass diese in der Lage ist, die für einen Arbeitseinsatz benötigte Energie für die dadurch vorgegebene Einsatzdauer bereitzustellen. In alternativen Ausführungen kann auf diese Vorgaben verzichtet werden, z.B. kann es ggf. ausreichend sein, wenn die Ladeeinstellinformationen und/oder die Nutzervorgabeinformationen nur die Lademodusinformationen enthalten.

Beim erfindungsgemäßen Batterielademanagementverfahren werden Ladeeinstellinformationen für die Batterieeinheiten in einer Lademanagementbasis vorgehalten, die Batterieeinheiten werden mit je einer Ladesteuereinheit ausgerüstet, eine Mehrzahl von Nutzerendgeräten wird bereitgestellt, an denen batterieladebezogene Nutzervorgabeinformationen eingebbar sind, und eine drahtlose Kommunikationsverbindung zur Datenübertragung zwischen der Lademanagementbasis einerseits und den Batterieeinheiten andererseits und zwischen den Nutzerendgeräten einerseits und der Lademanagementbasis und/oder den Batterieeinheiten andererseits wird bereitgestellt. Die Ladeeinstellinformationen und/oder die Nutzervorgabeinformationen umfassen Lademodusinformationen bezüglich einer Mehrzahl unterschiedlicher Lademodi für die Batterieeinheiten. Die Lademodusinformationen werden von der Lademanagementbasis und/oder von dem jeweiligen Nutzerendgerät über die Kommunikationsverbindung der Ladesteuereinheit in der jeweiligen Batterieeinheit zugeführt. Zur Durchführung eines Ladevorgangs werden für die jeweilige, an ein Ladegerät angekoppelte Batterieeinheit von deren Ladesteuereinheit zugehörige Ladeparameter-Sollwertinformationen in Abhängigkeit von den zugeführten Lademodusinformationen festgelegt und an das Ladegerät übermittelt. Es ergeben sich somit für dieses Batterielademanagementverfahren analog die gleichen Eigenschaften und Vorteile, wie oben zum erfindungsgemäßen Batterielademanagementsystem erwähnt, worauf zur Vermeidung von Wiederholungen verwiesen werden kann.

In einer Weiterbildung der Erfindung wird das Batterielademanagementverfahren vom erfindungsgemäßen Batterielademanagementsystem ausgeführt, was eine gegenüber anderen Implementierungen vorteilhafte Implementierung des Verfahrens darstellt.

In einer Weiterbildung der Erfindung werden für die Durchführung eines jeweiligen Ladevorgangs einer der Batterieeinheiten durch die zugehörige Ladesteuereinheit die Ladeparameter-Sollwertinformationen in Abhängigkeit von erfassten Istwerten des wenigstens einen laderelevanten Batteriezustandsparameters der Batterieeinheit festgelegt und periodisch aktualisiert. Dadurch kann der Ladevorgang in seinem zeitlichen Verlauf optimal an sich eventuell ändernde Gegebenheiten bezüglich des Zustands der Batterieeinheit angepasst werden, wie beispielsweise an die momentane Batterietemperatur. Diese Anpassung des Ladevorgangs an den momentanen Batteriezustand kann insbesondere auch einen Wechsel zwischen den verschiedenen möglichen Lademodi während des Ladevorgangs beinhalten. Alternativ kann vorgesehen sein, den Ladevorgang ohne anpassende Berücksichtigung des Batteriezustands durchzuführen, wenn dies für den betreffenden Anwendungsfall ausreicht.

Vorteilhafte Ausführungsformen der Erfindung sind in den Zeichnungen dargestellt. Diese und weitere Ausführungsformen der Erfindung werden nachfolgend näher erläutert. Hierbei zeigen:
- Fig. 1: eine schematische Blockdiagrammdarstellung eines Batterielade-managementsystems,
- Fig. 2: eine schematische Blockdiagrammdarstellung einer konkreteren Realisierung des Batterielademanagementsystems von Fig. 1,
- Fig. 3: ein Kennliniendiagramm zur Veranschaulichung unterschiedlicher, batterie-temperaturabhängiger Ladestromvorgaben für zwei verschiedene Lademodi und
- Fig.4: eine Flussdiagrammdarstellung einer Lademoduswahlprozedur eines Batterielademanagementverfahrens.

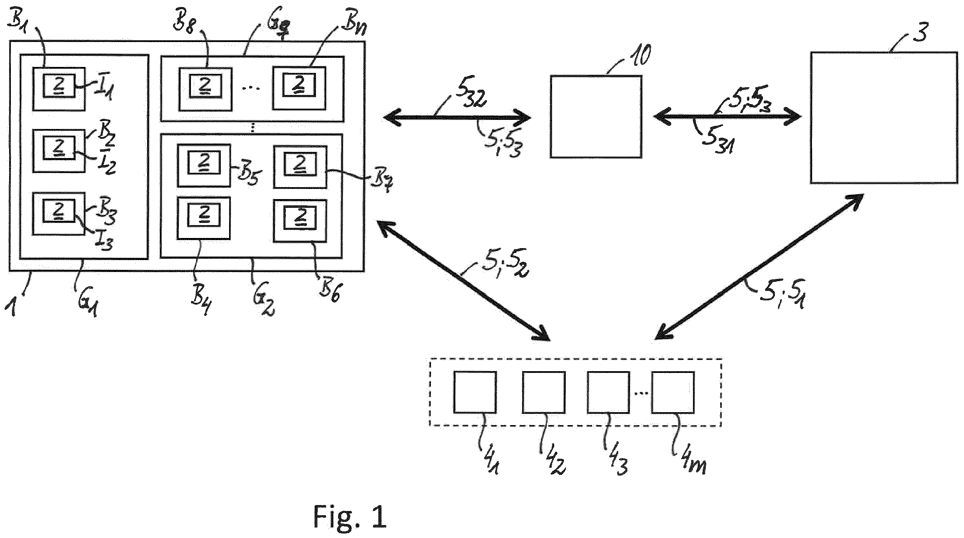

In Fig 1 ist schematisch ein Batterielademanagementsystem für eine Batterieflotte 1 gezeigt, die eine Anzahl n von wiederaufladbaren, kommunikationsfähigen Batterieeinheiten B₁, ..., Bₙ umfasst, wobei n eine beliebige natürliche Zahl größer als eins ist. Jede Batterieeinheit B₁, ..., Bₙ weist eine eigene Ladesteuereinheit 2 auf. Des Weiteren umfasst das Batterielademanagementsystem eine Lademanagementbasis 3, die zum Senden von Ladeeinstellinformationen für die Batterieeinheiten B₁, ..., Bₙ eingerichtet ist, eine Anzahl m von Nutzerendgeräten 4₁, ..., 4ₘ, wobei m eine beliebige natürliche Zahl größer als eins ist, und eine Kommunikationsverbindung 5 zur Datenübertragung zwischen der Lademanagementbasis 3 einerseits und den Batterieeinheiten B₁, ..., Bₙ andererseits und zwischen den Nutzerendgeräten 4₁, ..., 4ₘ einerseits und der Lademanagementbasis 3 und/oder den Batterieeinheiten B₁, ..., Bₙ andererseits. Die Nutzerendgeräte 4₁, ..., 4ₘ sind zum Senden von batterieladebezogenen Nutzervorgabeinformationen eingerichtet.

Die Kommunikationsverbindung 5 ist vorzugsweise, wie im gezeigten Beispiel, drahtlos ausgeführt und beinhaltet je nach Anwendungsfall einen oder mehrere Kommunikationskanäle und geeignete Kommunikationskomponenten bzw. Kommunikationsschnittstellen in den Nutzerendgeräten 4₁, ..., 4ₘ, den Ladesteuereinheiten 2 und der Lademanagementbasis 3 und ggf. extern, d.h. außerhalb dieser genannten Systemkomponenten. Exemplarisch sind diesbezüglich im Ausführungsbeispiel von Fig. 1 ein erster Kommunikationskanal 5₁ zwischen den Nutzerendgeräten 4₁, ..., 4ₘ einerseits und der Lademanagementbasis 3 andererseits, ein zweiter Kommunikationskanal 5₂ zwischen den Nutzerendgeräten 4₁, ..., 4ₘ einerseits und der Batterieflotte 1 bzw. den Batterieeinheiten B₁, ..., Bₙ andererseits und ein dritter Kommunikationskanal 5₃ zwischen der Lademanagementbasis 3 einerseits und der Batterieflotte 1 bzw. den Batterieeinheiten B₁, ..., Bₙ andererseits vorgesehen, wobei der dritte Kommunikationskanal 5₃ über eine Zwischenstation 10 z.B. in Form einer Gateway-Einheit geführt ist und sich dadurch in zwei sequentielle Teilkanäle 5₃₁, 5₃₂ zwischen der Lademanagementbasis 3 und der Zwischenstation 10 bzw. zwischen der Zwischenstation 10 und der Batterieflottte 1 unterteilt. Bevorzugt sind der Teilkanal 5₃₂ und der zweite Kommunikationskanal 5₂ jeweils durch eine kurzreichweitige Kommunikationsverbindung, insbesondere eine Bluetooth-Verbindung, realisiert, während der Teilkanal 5₃₁ und der erste Kommunikationskanal 5₁ bevorzugt jeweils durch eine langreichweitige Kommunikationsverbindung, besonders eine Internetverbindung wie eine LTE-, WiFi-, GSM-, oder LAN-Verbindung, realisiert sind.

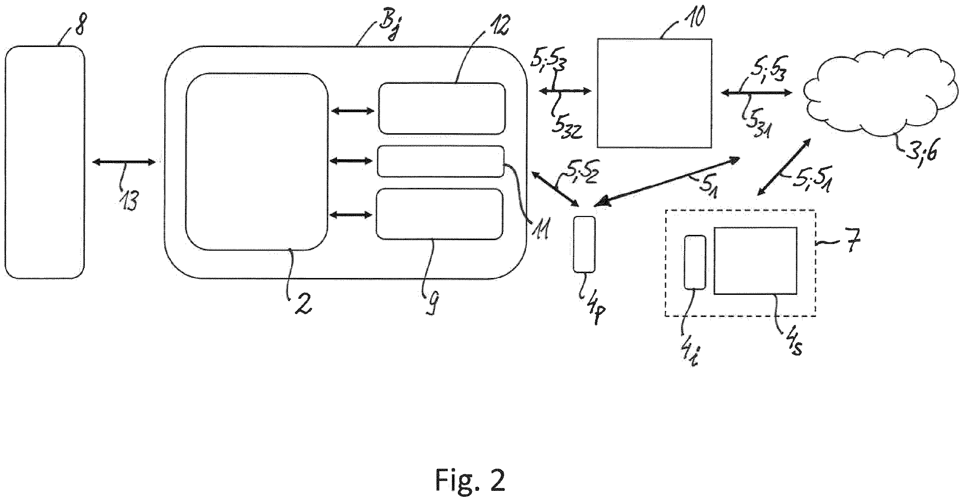

Fig. 2 zeigt eine vorteilhafte Realisierung des Systems von Fig. 1, wobei exemplarisch auf eine j-te Batterieeinheit Bⱼ Bezug genommen ist. Die Lademanagementbasis 3 ist in dieser Realisierung durch ein Cloud-Backend 6 von an sich herkömmlicher Art gebildet, die Nutzerendgeräte 4₁, ..., 4ₘ sind Teil eines Nutzer-Frontends 7 von an sich herkömmlicher Art, wobei stellvertretend ein i-tes Nutzerendgerät 4ᵢ in Form eines Smartphones gezeigt ist und das Frontend 7 weitere Nutzerendgeräte umfassen kann, z.B. ein Tablet 4S, einen Personalcomputer, i.e. PC, oder dgl. Das Frontend 7 kann sich räumlich weit entfernt von der Batterieflotte 1 befinden, wobei der Benutzer am Ort der Batterieflotte 1 z.B. über ein von ihm mitgeführtes Smartphone, in Fig. 2 durch ein Nutzerendgerät 4ₚ repräsentiert, direkt mit der jeweiligen Batterieeinheit Bⱼ oder mit dem Backend 6 bzw. der Zwischenstation 10 kommunizieren kann. Die Ladesteuereinheit ist z.B. durch einen Mikrocontroller mit implementierten Batteriemanagementfunktionen realisiert.

Die Ladeeinstellinformationen und/oder die Nutzervorgabeinformationen umfassen Lademodusinformationen bezüglich einer Mehrzahl unterschiedlicher Lademodi und können der Ladesteuereinheit 2 in der jeweiligen Batterieeinheit B₁, ..., Bₙ über die Kommunikationsverbindung 5 zugeführt werden. Die Ladesteuereinheit 2 ist dafür eingerichtet, zur Durchführung eines Ladevorgangs ihrer an ein Ladegerät, wie ein in Fig. 2 schematisch gezeigtes Ladegerät 8, angekoppelten Batterieeinheit B₁, ..., Bₙ zugehörige Ladeparameter-Sollwertinformationen in Abhängigkeit von den zugeführten Ladeeinstellinformationen und/oder Nutzervorgabeinformationen festzulegen und an das Ladegerät 8 zu übermitteln. Dazu können in einer entsprechenden Realisierung die Ladeparameter-Sollwertinformationen in Abhängigkeit von den Lademodusinformationen, d.h. Lademodusvorgaben, in der Ladesteuereinheit 2 hinterlegt sein.

Die Ladeparameter-Sollwertinformationen können sich insbesondere darauf beziehen, dass das Ladegerät 8 einen Ladevorgang für die jeweilige Batterieeinheit B₁, ..., Bₙ entsprechend einem Lademodus ausführt, wie er durch die Lademodusinformationen bestimmt ist, die in den zugeführten Ladeeinstellinformationen und/oder Nutzervorgabeinformationen enthalten sind. Die jeweilige Batterieeinheit B₁, ..., Bₙ bzw. genauer deren Ladesteuereinheit 2 übermittelt die Ladeparameter-Sollwertinformationen, d.h. die Informationen über Sollwerte der den Ladevorgang bestimmenden Ladeparameter, an das Ladegerät 8 in einer herkömmlichen Weise über eine zugehörige Kommunikationsverbindung 13 drahtgebunden, z.B. über Ladeanschlüsse der Batterieeinheit B₁, ..., Bₙ, oder drahtlos. Das Ladegerät 8 kann von einem beliebigen herkömmlichen Typ sein. Die Kommunikationsverbindung 13 kann bei Bedarf auch dazu genutzt werden, Daten von dem Ladegerät 8 an die Batterieeinheit B₁, ..., Bₙ bzw. die Ladesteuereinheit 2 zu übermitteln.

Die Nutzervorgabeinformationen können je nach Bedarf und Anwendungsfall insbesondere auch Informationen enthalten, die für verschiedene Aspekte eines Ziel-Zeit-Ladens nützlich sind, bei dem der Nutzer Vorgaben für die Ladesteuereinheit 2 darüber machen kann, zu welcher Zeit er welche Batterieeinheit der Batterieflotte 1 mit welchem Ladezustand verfügbar haben möchte. Solche Zielvorgaben können z.B. Informationen über eine gewünschte Batterieeinheit bzw. ein gewünschter Batterietyp, einen gewünschten Einsatzzeitpunkt, einen gewünschten Einsatzzweck, d.h. in welchem Arbeitsgerät die Batterieeinheit zum Einsatz kommen soll, eine gewünschte Batteriespannung und/oder eine gewünschte Energiemenge beinhalten. Auch die Ladeeinstellinformationen können weitere Vorgabeinformationen zusätzlich zu reinen Lademodusinformationen enthalten, wie die Vorgabe eines für eine längere Lagerung der jeweiligen Batterieeinheit B₁, ..., Bₙ optimalen Ladezustands, wofür oftmals ein Ladezustand gewählt wird, der ca. 80% des Vollladezustands beträgt, und/oder die Vorgabe eines priorisierten Lademodus, wie den für die Lebensdauer der Batterieeinheit optimalen Schonend-Lademodus oder den unter Umweltaspekten optimalen Nachhaltig-Lademodus. Die Ladesteuereinheit 2 ermittelt dann den jeweils optimalen Ladevorgang für die betreffende Batterieeinheit B₁, ..., Bₙ unter Berücksichtigung dieser Zielvorgaben. So kann die Ladesteuereinheit 2 u.a. beispielsweise dafür eingerichtet sein, anhand der vom Nutzer zugeführten Informationen über die gewünschte Einsatzzeit und das gewünschte Arbeitsgerät zu ermitteln, wieviel Aufladung die betreffende Batterieeinheit B₁, ..., Bₙ benötigt und mit welchem Lademodus bzw. welchen Ladeparameter-Sollwertinformationen diese Aufladung bestmöglich erfolgen kann.

Jede der Ladesteuereinheiten 2 der Batterieeinheiten B₁, ..., Bₙ weist in entsprechenden Realisierungen Software bzw. speziell Firmware auf, die, insbesondere bezüglich ihrer Versionen, nicht in allen Batterieeinheiten B₁, ..., Bₙ gleich sein muss, d.h. unterschiedliche Batterieeinheiten B₁, ..., Bₙ können unterschiedliche Firmware aufweisen. Die Firmware kann z.B. über die Kommunikationsverbindung 5 von einem der Nutzerendgeräte 4₁, ..., 4ₘ und/oder von der Lademanagementbasis 3 auf die Ladesteuereinheit 2 aufgespielt, insbesondere aktualisiert, werden. In vorteilhaften Ausführungen kann die Ladesteuereinheit 2 die Zuordnung von Ladeparameter-Sollwerten in Abhängigkeit von den zugeführten Lademodusinformationen gemäß der Firmware vornehmen bzw. festlegen, d.h. durch Übermitteln einer anderen Firmware, insbesondere Firmware-Version, von der Lademanagementbasis 3 und/oder dem Nutzerendgerät 4₁, ..., 4ₘ kann beeinflusst, insbesondere bestimmt oder programmiert oder festgelegt, werden, wie die Ladesteuereinheit 2 Ladeparameter-Sollwerte in Abhängigkeit von den zugeführten Lademodusinformationen festlegt.

In der vorteilhaften, in Fig. 2 gezeigten Ausführung beinhaltet die jeweilige Batterieeinheit Bⱼ zusätzlich zu der Ladesteuereinheit 2 eine Sensorik 12 zum Erfassen von Ladeparametern. Die Sensorik 12 kann insbesondere Sensoren zum Erfassen von innerer Batterietemperatur und/oder Umgebungstemperatur, Spannung und/oder Strom umfassen. So können Spannung und/oder Strom z.B. mittels mit einzelnen Serieblöcken in der Batterieeinheit Bⱼ bzw. dem Akkupack verbundenen Kabeln, insbesondere mit sogenannten Balancer-Kabeln, gemessen werden. Ein Temperatursensor kann in der Batterieeinheit Bⱼ insbesondere zwischen oder unter darin angeordneten Batteriezellen und/oder am Rand bzw. auf der Innenseite eines Gehäuses der Batterieeinheit Bⱼ angeordnet sein. Auf diese Weise können mittels der Sensorik 12 insbesondere die Temperatur der Batterieeinheit Bⱼ und die momentan von der Batterieeinheit Bⱼ bereitstellbare elektrische Spannung bzw. ihr Ladezustand erfasst werden, wodurch speziell auch Istwerte von relevanten, überwachten Ladeparametern erfasst und überwacht werden können.

Des weiteren beinhaltet die Batterieeinheit Bⱼ in dieser gezeigten Ausführung eine Kommunikationsschnittstelle 9 zur Anbindung an die Kommunikationsverbindung 5, um Daten wie z.B. erfasste Ladeparameterdaten und/oder Batteriezustandsinformationen zu den Nutzerendgeräten 4₁, ..., 4ₘ und/oder zu der Zwischenstation 10 und/oder zu der Lademanagementbasis 3 zu übermitteln und die Ladeeinstellinformationen bzw. die Nutzervorgabeinformationen zu empfangen.

Weiter weist die Batterieeinheit Bⱼ in dieser gezeigten Ausführung eine z.B. optische Anzeigeeinheit 11 auf, beispielsweise mit einer oder mehreren Leuchtdioden, i.e. LEDs. Auf der Anzeigeeinheit 11 können durch die Batterieeinheit Bⱼ und/oder durch die Ladesteuereinheit 2 je nach Bedarf Istwerte von Ladeparametern wie z.B. ein aktueller Ladestand und/oder Ladestrom und/oder eine aktuelle Ladeleistung und/oder Batterietemperatur an der Batterieeinheit Bⱼ angezeigt bzw. ausgegeben werden.

In entsprechenden Ausführungsformen ist die jeweilige Batterieeinheit B₁, ..., Bₙ als Akkupack zur Energieversorgung von handgeführten Arbeitsgeräten, insbesondere von handgeführten Garten-, Forst-, Bau- und/oder Bodenbearbeitungsgeräten, oder von autonomen Bodenbearbeitungsgeräten, wie Mährobotern, oder elektrisch angetriebenen Fahrzeugen, wie E-Bikes, ausgebildet. Derartige Akkupacks sind dem Fachmann in vielerlei Typen bekannt, was daher hier keiner weiteren Erläuterungen bedarf. So kann der jeweilige Akkupack insbesondere mehrere Akkumulatorzellen umfassen, die seriell und/oder parallel elektrisch miteinander verbunden in der Batterieeinheit B₁, ..., Bₙ angeordnet sind. Die jeweilige Akkumulatorzelle kann z.B. als zylinderförmige Zelle, insbesondere als sogenannte 18650-Zelle oder 21700-Zelle, oder als Pouch-Zelle ausgebildet sein. Bevorzugt ist die Akkumulatorzelle eine Lithium-Ionen-Zelle, aber auch andere Materialien wie Nickel-Metallhydrid oder Nickel-Cadmium sind möglich. Die Batterieeinheiten B₁, ..., Bₙ können unterschiedliche Maße bzw. Dimensionen, insbesondere Länge, Breite, Höhe oder Masse, aufweisen. Des Weiteren können sie sich in ihren maximalen Energieinhalte voneinander unterscheiden.

In vorteilhaften Ausführungsformen ist, wie für das gezeigte Beispiel in Fig. 1 schematisch veranschaulicht, jeder Batterieeinheit B₁, ..., Bₙ eine Identifikatorinformation I₁, ..., Iₙ zuweisbar. Über diese Identifikatorinformation I₁, ..., Iₙ ist die jeweilige Batterieeinheit B₁, ..., Bₙ eindeutig identifizierbar und von allen anderen Batterieeinheiten unterscheidbar. Die Identifikatorinformationen I₁, ..., Iₙ können von einer beliebigen herkömmmlichen Art sein, wie dem Fachmann an sich bekannt, z.B. in Form entsprechender digitaler ID(Identifikations)-Codes.

Die Nutzerendgeräte 4₁, ..., 4ₘ und/oder die Lademanagementbasis 3 sind, wie ebenfalls in Fig. 1 gezeigt, in diesem Fall dazu eingerichtet, unter Verwendung der Identifikatorinformation I₁, ..., Iₙ eine oder mehrere der Batterieeinheiten B₁, ..., Bₙ in eine Anzahl q von Gleichladegruppen G₁, ..., G_{q} zu gruppieren, mit q als einer beliebig vorgebbaren natürlichen Zahl. Speziell sind im gezeigten Fall exemplarisch die Batterieeinheiten B₁, B₂ und B₃ einer Gleichladegruppe G₁, die Batterieeinheiten B₄, B₅, B₆ und B₇ einer Gleichladegruppe G₂ und die Batterieeinheiten B₈ bis Bₙ einer Gleichladegruppe G_{q} zugeordnet. Die Zuordnung kann aber auch anders erfolgen, insbesondere mehr oder weniger Batterieeinheiten B₁, ..., Bₙ und/oder Gleichladegruppen G₁, ..., G_{q} aufweisen. Allgemein können die Batterieeinheiten B₁, ..., Bₙ der Batterieflotte 1 hierbei gar nicht gruppiert oder in nur eine einzige oder in mehrere Gleichladegruppen G₁, ..., G_{q} aufgeteilt sein. Einer Gleichladegruppe G₁, ..., G_{q} können keine, eine, mehrere oder alle Batterieeinheiten B₁, ..., Bₙ zugewiesen sein. Ferner kann vorgesehen sein, dass eine jeweilige Batterieeinheit B₁, ..., Bₙ zu einem jeweiligen Zeitpunkt keiner oder nur einer einzigen oder mehreren der Gleichladegruppen G₁, ..., G_{q} zugeordnet ist. Wird eine bereits einer ersten Gleichladegruppe G₁, ..., G_{q} zugeordnete Batterieeinheit B₁, ..., Bₙ einer zweiten Gleichladegruppe G₁, ..., G_{q} zugeordnet, kann sie, insbesondere durch den Nutzer auswählbar, zusätzlich der ersten Gleichladegruppe G₁, ..., G_{q} zugeordnet bleiben oder stattdessen aus der ersten Gleichladegruppe G₁, ..., G_{q} entfernt werden.

In entsprechenden Realisierungen kann eine jeweilige Gleichladegruppe G₁, ..., G_{q} durch einen Nutzer erstellt werden, ohne dass dieser Gleichladegruppe G₁, .. G_{q} zum Zeitpunkt der Erstellung bereits eine Batterieeinheit B₁, ..., Bₙ zugeordnet ist oder wird. Die Zuordnung einer Batterieeinheit B₁, ..., Bₙ kann auch erst zu einem beliebigen Zeitpunkt nach dem Erstellen einer Gleichladegruppe G₁, ..., G_{q} erfolgen. Dies ermöglicht, dass die Gleichladegruppen G₁, ..., G_{q} erstellt und ihnen Ladeeinstellinformationen und/oder Nutzervorgabeinformationen zugewiesen werden können, ohne diesen direkt Batterieeinheiten B₁, ..., Bₙ zuordnen zu müssen. Dadurch kann die Zuweisung von Ladeeinstellinformationen und/oder Nutzervorgabeinformationen an einzelne Batterieeinheiten B₁, ..., Bₙ und/oder Gleichladegruppen G₁, ..., G_{q} bei Bedarf schneller erfolgen. Es ist auch möglich, dass die Zuordnung der Batterieeinheiten B₁, ..., Bₙ zu Gleichladegruppen G₁, ..., G_{q} nicht durch einen Nutzer, sondern automatisch, insbesondere ohne Nutzereinwirkung, durch ein jeweiliges Nutzerendgerät 4₁, ..., 4ₘ und/oder die Lademanagementbasis 3 erfolgt. Die automatische Zuordnung kann z.B. nach Auswerten und/oder in Abhängigkeit von Nutzungshistorieinformationen erfolgen.

Eine Gleichladegruppe kann z.B. Batterieeinheiten gleichen oder unterschiedlichen Typs umfassen, die für einen gleichen bestimmten Einsatzzweck oder ein gleiches bestimmtes Einsatzteam verwendet werden können bzw. sollen, z.B. ein Mähteam für Rasenmäharbeiten, ein Gartenbearbeitungsteam für Arbeiten im Garten-/Landschaftsbau oder ein Forstteam für Forstarbeiten.

In vorteilhaften Ausführungsformen umfassen die Lademodi mehrere von einem Nicht-Lademodus, einem Normal-Lademodus, einem Schnell-Lademodus, einem Schonend-Lademodus und einem Nachhaltig-Lademodus, mit den dazu bereits oben erläuterten Eigenschaften dieser verschiedenen Lademodi. Die Lademanagementbasis 3 und/oder die Nutzerendgeräte 4₁, ..., 4ₘ und/oder die Ladesteuereinheiten 2 sind dafür eingerichtet, die Lademodusinformationen in Abhängigkeit von Priorisierungsinformationen und/oder Nutzungshistorieinformationen festzulegen. Zusätzlich oder alternativ können andere bzw. weitere Lademodi umfasst sein. Beispielsweise ist es möglich, dass weitere Lademodi durch einen Nutzer definiert werden.

Nutzungshistorieinformationen sind gesammelte und/oder gespeicherte Informationen über die Nutzung der Batterieeinheiten B₁, ..., Bₙ in der Vergangenheit. Dabei können die Nutzungshistorieinformationen durch die Nutzerendgeräte 4₁, ..., 4ₘ und/oder die Lademanagementbasis 3 ausgewertet werden. Nutzungshistorieinformationen können insbesondere Informationen über Nutzungsstartzeitpunkte, Nutzungsendzeitpunkte, Nutzungsdauern, abgegebene Energiemengen bzw. Leistungen und/oder dabei auftretende Temperaturen, insbesondere im Inneren der Batterieeinheiten B₁, ..., Bₙ oder in deren Umgebung, umfassen. Alternativ oder zusätzlich können die Nutzungshistorieinformationen auch Ladeinformationen, insbesondere Batterieladeparameter und/oder Batteriezustandsparameter, umfassen, wie Ladeleistung, Ladestrom, Ladespannung und Ladeschlussspannung, innere Batterietemperatur und/oder Umgebungstemperatur, Ladedauer, Ladestartzeitpunkt und/oder Ladeendzeitpunkt.

Falls einer Batterieeinheit B₁, ..., Bₙ mehrere Lademodusinformationen übermittelt worden sind, legt die Ladesteuereinheit 2 und/oder die Lademanagementbasis 3 und/oder das Nutzerendgerät 4₁, ..., 4ₘ unter Verwendung der Priorisierungsinformation Ladeparameter-Sollwerte fest, welche von einem oder mehreren Lademodi abhängen bzw. aus diesen kombiniert sind oder durch einen einzigen priorisierten Lademodus oder durch einen Lademodus gegeben sind, der aus mehreren zugewiesenen Lademodi als ein momentan optimaler Lademodus auswählt ist.

Die Priorisierungsinformation ermöglicht es, dass Lademodusinformationen vom System selbsttätig ohne Zutun oder Einwirken des Nutzers und/oder unter Berücksichtigung oder sogar ausschließlich durch eine Eingabe oder Auswahl des Nutzers über ein jeweiliges Nutzerendgerät 4₁, ..., 4ₘ vorgegeben werden können.

In einer entsprechenden Ausführung umfassen die Nutzungshistorieinformationen Informationen über einen Nichtnutzungszeitraum, und die Priorisierungsinformationen umfassen eine Priorisierung des Schonend-Lademodus für den Nichtnutzungszeitraum. Der Nichtnutzungszeitraum kann insbesondere die Zeitdauer zwischen zwei Einsätzen oder bis zu einem nächsten Einsatz der Batterieeinheit B₁, ..., Bₙ sein, insbesondere zur Energieversorgung eines Arbeitsgeräts. Der Nichtnutzungszeitraum kann z.B. durch das jeweilige Nutzerendgerät 4₁, ..., 4ₘ und/oder die Lademanagementbasis 3, insbesondere durch Auswerten der Nutzungshistorieinformationen, bestimmt werden. Der Nichtnutzungszeitraum kann individuell einer jeweiligen Batterieeinheit B₁, ..., Bₙ, insbesondere unter Verwendung der zugehörigen Identifikatorinformation I₁, ..., Iₙ, zugeordnet sein, insbesondere muss er nicht für alle Batterieeinheiten B₁, ..., Bₙ gleich sein. Zusätzlich oder alternativ kann ein Nichtnutzungszeitraum auch einer jeweiligen Gleichladegruppe G₁, ..., G_{q} bzw. allen der betreffenden Gleichladegruppe G₁, ..., G_{q} zugeordneten Batterieeinheiten B₁, ..., Bₙ zugeordnet sein. Der Nichtnutzungszeitraum kann z.B. ein Zeitraum in der Nacht und/oder am Wochenende sein.

In entsprechenden Ausführungsformen umfassen die Nutzungshistorieinformationen Informationen über einen erwarteten Nutzungsstartzeitpunkt und die Priorisierungsinformationen eine Priorisierung des Schnell-Lademodus in Abhängigkeit von dem erwarteten Nutzungsstartzeitpunkt. Dabei kann der erwartete Nutzungsstartzeitpunkt insbesondere ohne aktives Zutun oder Einwirken durch einen Nutzer automatisch vom System bestimmt werden. Dem Schnell-Lademodus wird insbesondere dann Priorität eingeräumt, wenn ein schnelles Laden der betreffenden Batterieeinheit benötigt wird, um zum erwarteten Beginn der Nutzung ausreichend Energie in der Batterieeinheit verfügbar zu haben.

In entsprechenden Realisierungen umfasst die Nutzervorgabeinformation Informationen über einen insbesondere durch den Nutzer und/oder mittels des jeweiligen Nutzerendgeräts 4₁, ..., 4ₘ angeforderten Nutzungsstartzeitpunkt, und die Nutzerendgeräte 4₁, ..., 4ₘ und/oder die Lademanagementbasis 3 und/oder die Ladesteuereinheit 2 sind dafür eingerichtet, die Lademodusinformationen und/oder die Ladeparameter-Sollwertinformationen in Abhängigkeit vom angeforderten Nutzungsstartzeitpunkt festzulegen. Der Nutzer kann auf diese Weise, indem er dem System den gewünschten Nutzungsstartzeitpunkt zur Kenntnis gibt, die Festlegung der Lademodusinformationen bzw. der Ladeparameter-Sollwertinformationen derart beeinflussen, dass das System den Ladevorgang für eine betreffende Batterieeinheit optimal darauf abstellen kann. So kann z.B. eine Priorisierung des angeforderten Nutzungsstartzeitpunktes dahingehend vorgesehen sein, dass die Batterieeinheit im Schnell-Lademodus geladen wird, bis sie einen zum angeforderten Nutzungsstartzeitpunkt benötigten Ladestand bzw. Ladepegel, d.h. Ladekapazität bzw. Energieinhalt, erreicht hat, und anschließend in einem anderen Lademodus, wie dem Nicht-Lademodus oder dem Schonend-Lademodus oder dem Nachhaltig-Lademodus, geladen wird. Dazu kann die Vorgabe des anforderten Nutzungsstartzeitpunktes von einer Vorgabe eines angeforderten Ladestands der Batterieeinheit B₁, ..., Bₙ begleitet sein, den diese zum Nutzungsstartzeitpunkt mindestens haben soll oder muss.

In vorteilhaften Ausführungsformen ist die jeweilige Ladesteuereinheit 2 zur Erfassung wenigstens eines laderelevanten Batteriezustandsparameters ihrer Batterieeinheit B₁, ..., Bₙ und zur Festlegung der Ladeparameter-Sollwertinformationen für die betreffende Batterieeinheit B₁, ..., Bₙ in Abhängigkeit von den erfassen Werten des wenigstens einen Batteriezustandsparameters eingerichtet.

Derartige Batteriezustandsparameter bzw. Batteriezustandsinformationen können insbesondere eine oder mehrere der folgenden Batteriezustandsgrößen sein: ein Ladestand, ein Alterungszustand, die Batterietemperatur, eine, insbesondere maximale, Ladeschlussspannung und eine, insbesondere minimale, Entladeschlussspannung. Die Batteriezustandsinformationen können in oder auf oder durch die Ladesteuereinheit 2 gespeichert werden. Ferner kann die Ladesteuereinheit 2 diese Informationen über die Kommunikationsverbindung 5 an die Nutzerendgeräte 4₁, ..., 4ₘ und/oder die Lademanagementbasis 3 übermitteln, insbesondere um sie dort zu speichern und/oder auszuwerten.

Die Batteriezustandsinformationen können durch die Ladesteuereinheit 2 und/oder die Nutzerendgeräte 4₁, ..., 4ₘ und/oder die Lademanagementbasis 3 bei der Festlegung der Lademodusinformationen und/oder der Ladeparameter-Sollwertinformationen berücksichtigt werden, insbesondere ggf. unter zusätzlicher Berücksichtigung der Priorisierungsinformationen. Beispielsweise kann es sein, dass durch den Nutzer ein Nutzungsstartzeitpunkt angefordert ist, die Ladesteuereinheit 2 aber dennoch die Ladeparameter-Sollwertinformationen anhand der Lademodusinformationen ohne Beachtung des angeforderten Nutzungsstartzeitpunktes und evtl. auch ohne Beachtung anderweitiger erfasster und/oder abgespeicherter Batteriezustandsinformationen so festlegt, dass eine ansonsten drohende Überbeanspruchung und/oder Überhitzung und/oder Schädigung der Batterieeinheit B₁, ..., Bₙ während oder durch den Ladevorgang vermieden wird.

Die Berücksichtigung der Batteriezustandsinformationen für die Befehligung eines jeweiligen Batterieladevorgangs kann insbesondere bedeuten, dass für verschiedene Batterieeinheiten B₁, ..., Bₙ mit unterschiedlichen Batteriezuständen unterschiedliche Lademodusinformationen bzw. Ladeparameter-Sollwertinformationen festlegt werden, auch wenn für diese zunächst, d.h. ohne Berücksichtigung ihres Batteriezustands, ein gleicher Lademodus angezeigt wäre. Das kann z.B. der Fall sein, wenn zwei Batterieeinheiten B₁, ..., Bₙ unterschiedliche Alterungszustände aufweisen.

In einer bevorzugten Ausführung werden die Batteriezustandsinformationen bei der Festlegung der Lademodusinformationen bzw. der Ladeparameter-Sollwertinformationen stets höher priorisiert als Nutzungshistorieinformationen und/oder durch den Nutzer vorgegebene Lademodi und/oder andere Vorgaben, wie ein Nutzungsstartzeitpunkt.

Die jeweilige Ladesteuereinheit 2 kann z.B. Grenzwerte für die erfassten Batteriezustandsgrößen speichern und die Ladeparameter-Sollwertinformationen abhängig von einem Vergleich der erfassten Batteriezustandsinformationen mit den zugehörigen Batteriezustandsgrenzwerten festlegen.

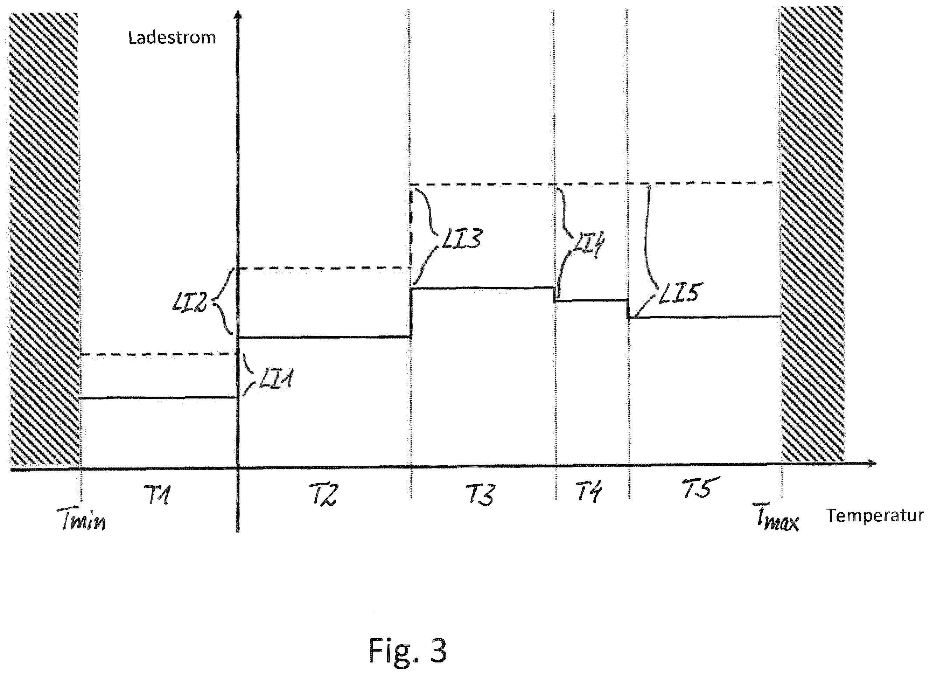

In vorteilhaften Ausführungen umfassen die Ladeparameter-Sollwertinformationen unterschiedliche Ladestrom- und/oder Ladespannungs-Sollwertvorgaben für mindestens fünf unterschiedliche Batterietemperaturbereiche, wie im Kennliniendiagramm von Fig. 3 für ein Beispiel mit sieben unterschiedlichen Batterietemperaturbereichen dargestellt. In Fig. 3 sind exemplarisch ein erster Lademodus durch einen mit durchgezogenen Linien wiedergegebenen Kennlinienverlauf des Ladestroms in Abhängigkeit von der Batterietemperatur und ein zweiter Lademodus durch einen mit gestrichelten Linien wiedergegebenen Kennlinienverlauf veranschaulicht. In beiden Lodemodi geben die Ladeparameter-Sollwertinformationen unterhalb einer Minimaltemperatur Tmin und oberhalb einer Maximaltemperatur Tmax den Nicht-Lademodus vor. Für eine an die Minimaltemperatur Tmin angrenzende Folge von mindestens zwei Batterietemperaturbereichen, im gezeigten Beispiel von drei Batterietemperaturbereichen T1, T2, T3, geben die Ladeparameter-Sollwertinformationen einen sukzessiv höheren Ladestrom LI1, LI2, LI3 und in der Regel auch eine sukzessiv höhere Ladespannung vor. Für eine an die Maximaltemperatur Tmax angrenzende Folge von mindestens zwei Batterietemperaturbereichen, im gezeigten Beispiel wiederum ein Folge von drei Batterietemperaturbereichen T3, T4, T5, geben die Ladeparameter-Sollwertinformationen einen im zweiten Lademodus gleichbleibenden und im ersten Lademodus sukzessiv geringeren Ladestrom LI4, LI5 und in der Regel auch eine gleichbleibende oder sukzessiv geringere Ladespannung vor. Konkret ist im gezeigten Beispiel die Ladestromreduzierung in jedeer der zwei Stufen vor der Maximaltemperatur Tmax betraglich geringer als die Ladestromerhöhung in jeder der zwei Stufen nach der Minimaltemperatur Tmin.

Allgemein können z.B. drei bis zweiundzwanzig, bevorzugt zwischen fünf und zehn, Temperaturbereiche definiert sein. Die Ladeparameter-Sollwertinformationen können zusätzlich von weiteren Batteriezustandsinformationen abhängen. Möglich ist diesbezüglich z.B. eine Abhängigkeit vom Alterungszustand der Batterieeinheit B₁, ..., Bₙ. Ebenfalls möglich ist eine Festlegung der Ladeparameter-Sollwertinformationen durch die Ladesteuereinheit 2 derart, dass bestimmte Temperaturbereiche gemieden werden, d.h. es erfolgt dann keine Aufladung der Batterieeinheit B₁, ..., Bₙ. Weiter ist möglich, bestimmte Ladeparameter-Sollwertinformationen durch die Ladesteuereinheit 2 nur in bestimmten Temperaturbereichen und in bestimmten anderen Temperaturbereichen nicht zuzulassen bzw. festzulegen. Weiter kann vorgesehen sein, bestimmte Ladeparameter-Sollwertinformationen unabhängig von Temperaturinformationen bzw. über alle Temperaturbereiche hinweg gleichbleibend festzulegen.

Die Anzahl von Temperaturbereichen und deren Aufteilung können abhängig von der Batteriezustandsinformation, insbesondere dem Alterungszustand der Batterieeinheit B₁, ..., Bₙ, festgelegt sein. Weiter ist es möglich, dass die Temperaturbereiche für die Batterieeinheiten B₁, ..., Bₙ gleich oder verschieden sind. Es kann auch vorgesehen sein, dass die Temperaturbereiche für alle Batterieeinheiten B₁, ..., Bₙ, die einer bestimmten Gleichladegruppe, z.B. der Gleichladegruppe G₁, zugeordnet sind, gleich und für alle Batterieeinheiten B₁, ..., Bₙ, die einer anderen Gleichladegruppe, z.B. der Gleichladegruppe G₂, zugeordnet sind, ebenfalls gleich, aber verschieden von denen der zur ersten Gleichladegruppe G₁ gehörigen Batterieeinheiten B₁, ..., Bₙ sind.

Das in den Fig. 1 und 2 veranschaulichte Batterielademanagementsystem ermöglicht die Durchführung eines Batterielademanagementverfahrens für die Batterieflotte 1 mit den Batterieeinheiten B₁, ..., Bₙ, bei dem die Ladeeinstellinformationen für die Batterieeinheiten B₁, ..., Bₙ von der Lademanagementbasis 3 übertragen werden, die Batterieeinheiten B₁, ..., Bₙ mit der jeweiligen Ladesteuereinheit 2 ausgerüstet werden, die Nutzerendgeräte 4₁, ..., 4ₘ bereitgestellt werden, von denen batterieladebezogene Nutzervorgabeinformationen übertragen werden, die Kommunikationsverbindung 5 zur Datenübertragung zwischen der Lademanagementbasis 3 einerseits und den Batterieeinheiten B₁, ..., Bₙ andererseits und zwischen den Nutzerendgeräten 4₁, .. 4ₘ einerseits und der Lademanagementbasis 3 und/oder den Batterieeinheiten B₁, ..., Bₙ andererseits bereitgestellt wird, die Ladeeinstellinformationen und/oder die Nutzervorgabeinformationen die Lademodusinformationen bezüglich der unterschiedlichen Lademodi umfassen, die Ladeeinstellinformationen von der Lademanagementbasis 3 und/oder die Nutzervorgabeinformationen von den Nutzerendgeräten 4₁, ..., 4ₘ über die Kommunikationsverbindung 5 der Ladesteuereinheit) in der jeweiligen Batterieeinheit B₁, ..., Bₙ zugeführt werden und zur Durchführung eines Ladevorgangs für die jeweilige, an das Ladegerät 8 angekoppelte Batterieeinheit B₁, ..., Bₙ von deren Ladesteuereinheit 2 die zugehörigen Ladeparameter-Sollwertinformationen in Abhängigkeit von den zugeführten Ladeeinstellinformationen und/oder Nutzervorgabeinformationen festgelegt und an das Ladegerät übermittelt werden.

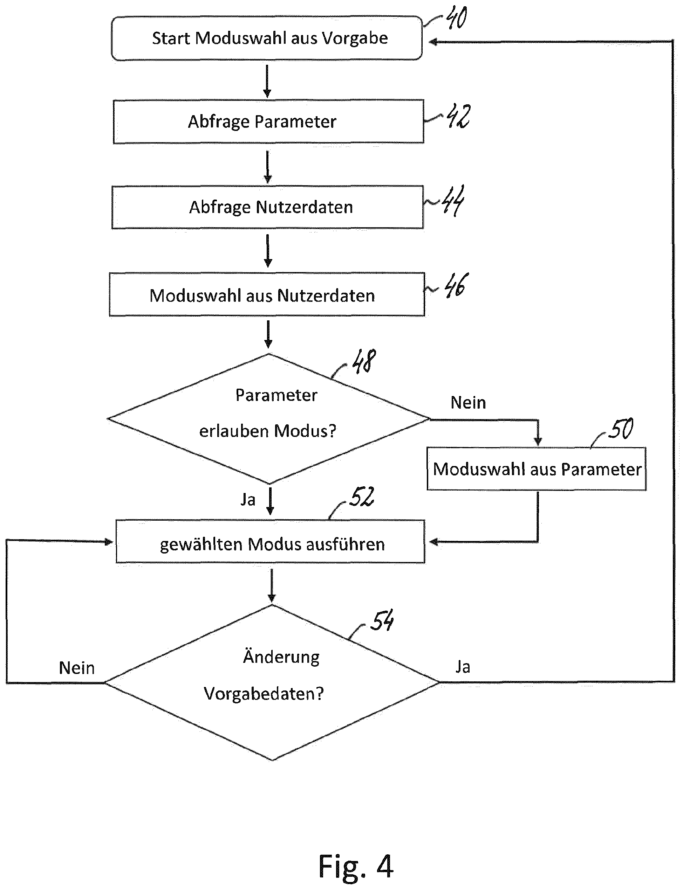

Fig. 4 zeigt ein Ablaufdiagramm, welches einen spezifischen Teil des Batteriemanagementverfahrens in einem Ausführungsbeispiel veranschaulicht. Wie daraus ersichtlich, stehen der Ladesteuereinheit 2 in einem Schritt 40 ein Satz an Lademodusinformationen zur Verfügung. Diese Lademodusinformationen können insbesondere aus den vorausgegangenen Ladeeinstellinformationen und/oder Nutzervorgabeinformationen und ggf. vorab vorliegenden Batteriezustandsinformationen abgeleitet sein. In einem Schritt 42 fragt die jeweilige Ladesteuereinheit 2 die aktuell zur Verfügung stehenden Batteriezustandsparameter wie z.B. die Temperatur der Batterieeinheit B₁, ..., Bₙ ab. In einem Schritt 44 fragt die Ladesteuereinheit 2 die Nutzervorgabeinformationen ab, wie z.B. ein angeforderter Nutzungsstartzeitpunkt. Abhängig von den Nutzervorgabeinformationen und den Ladeeinstellinformationen legt die Ladesteuereinheit 2 in einem Schritt 46 einen aktuellen Lademodus fest.

Anschließend wird in einem Abfrageschritt 48 der in Schritt 46 aus den Nutzerdaten bestimmte Lademodus mit den in Schritt 42 abgefragten Batteriezustandsparametern verknüpft bzw. verglichen. Die Verknüpfung bzw. der Vergleich dieser Daten berücksichtigt die Priorisierung der vorhandenen Lademodusinformationen und resultiert in einer entsprechenden Priorisierungsinformation. Diese Priorisierungsinformation umfasst die Information, ob die Batteriezustandsparameter den gewählten Lademodus zulassen oder nicht. Ist dies nicht der Fall, wird der Lademodus in einem Schritt 50 basierend auf den Batteriezustandsparametern und dem vorgewählten Lademodus neu bestimmt oder festgelegt. Andernfalls wird der vom Nutzer vorgewählte bzw. vom System vorab priorisierte Lademodus von der Ladesteuereinheit 2 beibehalten, d.h. die Batteriezustandsparameter verändern den vorbestimmten Lademodus in diesem Fall nicht. Anschließend wird dann der Ladevorgang mit dem solchermaßen ermittelten aktuellen Lademodus in einem Schritt 52 ausgeführt.

In einem Schritt 54 wird überprüft, ob neue oder geänderte Ladeeinstellinformationen und/oder Nutzervorgabeinformationen, insbesondere Lademodusinformationen, und/oder Batteriezustandsinformationen, vorliegen. Ist dies nicht der Fall, wird der bisher ausgeführte Lademodus beibehalten. Liegen dagegen geänderte oder neue Informationen vor, wird zum Schritt 40 zurückgekehrt und basierend auf diesen neuen oder geänderten Informationen Aktualisierung des Lademodus bzw. der Ladeparameter-Sollwertinformationen durchgeführt.

Wie die obige Beschreibung exemplarischer Ausführungsbeispiele deutlich macht, stellt die Erfindung ein Batterielademanagementsystem und ein Batterielademanagementverfahren zur Verfügung, mit denen die Batterieeinheiten einer Batterieflotte in einer sehr vorteilhaften Weise hinsichtlich ihrer Ladezustände, ihrer Ladeprozeduren und ihrer Zuordnung zu Einsatzteams verwaltet werden können.

## Patentansprüche

1. Batterielademanagementsystem für eine Batterieflotte (1) mit einer Mehrzahl von wiederaufladbaren, kommunikationsfähigen Batterieeinheiten (B₁, ..., Bₙ), umfassend
- eine Lademanagementbasis (3), die zum Senden von Ladeeinstellinformationen für die Batterieeinheiten (B₁, ..., Bₙ) eingerichtet ist,
- eine Mehrzahl von Nutzerendgeräten (4₁, ..., 4ₘ), die zum Senden von batterieladebezogenen Nutzervorgabeinformationen eingerichtet sind,
- je eine Ladesteuereinheit (2) in jeder der Batterieeinheiten (B₁, ..., Bₙ) und
- eine Kommunikationsverbindung (5) zur Datenübertragung zwischen der Lademanagementbasis (3) einerseits und den Batterieeinheiten (B₁, ..., Bₙ) andererseits und zwischen den Nutzerendgeräten (4₁, ..., 4ₘ) einerseits und der Lademanagementbasis (3) und/oder den Batterieeinheiten (B₁, ..., Bₙ) andererseits,
- wobei die Ladeeinstellinformationen und/oder die Nutzervorgabeinformationen Lademodusinformationen bezüglich einer Mehrzahl unterschiedlicher Lademodi für die Batterieeinheiten (B₁, ..., Bₙ) umfassen,
- wobei der Ladesteuereinheit (2) in der jeweiligen Batterieeinheit (B₁, ..., Bₙ) über die Kommunikationsverbindung (5) die Ladeeinstellinformationen von der Lademanagementbasis (3) und/oder die Nutzervorgabeinformationen von den Nutzerendgeräten (4₁, ..., 4ₘ) zuführbar sind und
- wobei die Ladesteuereinheit (2) dafür eingerichtet ist, zur Durchführung eines Ladevorgangs ihrer an ein Ladegerät angekoppelten Batterieeinheit (B₁, ..., Bₙ) zugehörige Ladeparameter-Sollwertinformationen in Abhängigkeit von den zugeführten Ladeeinstellinformationen und/oder Nutzervorgabeinformationen festzulegen und an das Ladegerät zu übermitteln.

2. Batterielademanagementsystem nach Anspruch 1, wobei die Batterieeinheiten (B₁, ..., Bₙ) als Akkupacks zur Energieversorgung von handgeführten Arbeitsgeräten, insbesondere von handgeführten Garten-, Forst-, Bau- und/oder Bodenbearbeitungsgeräten, ausgeführt sind.

3. Batterielademanagementsystem nach Anspruch 1 oder 2, wobei jeder Batterieeinheit (B₁, ..., Bₙ) eine Identifikatorinformation (I₁, ..., Iₙ) zuweisbar ist und die Nutzerendgeräte (4₁, ..., 4ₘ) und/oder die Lademanagementbasis (3) zur Gruppierung der Batterieeinheiten (B₁, ..., Bₙ) in eine oder mehrere Gleichladegruppen (G₁, ..., G_{q}) unter Verwendung der Identifikatorinformationen (I₁, ..., Iₙ) eingerichtet sind/ist.

4. Batterielademanagementsystem nach einem der Ansprüche 1 bis 3, wobei die Lademodi mehrere von einem Nicht-Lademodus, einem Normal-Lademodus, einem Schnell-Lademodus, einem Schonend-Lademodus und einem Nachhaltig-Lademodus umfassen und die Lademanagementbasis (3) und/oder die Nutzerendgeräte (4₁, ..., 4ₘ) und/oder die Ladesteuereinheiten (2) dafür eingerichtet ist/sind, die Lademodusinformationen und/oder die Ladeparameter-Sollwertinformationen in Abhängigkeit von Priorisierungsinformationen und/oder Nutzungshistorieinformationen festzulegen.

5. Batterielademanagementsystem nach Anspruch 4, wobei die Nutzungshistorieinformationen Informationen über einen Nichtnutzungszeitraum umfassen und die Priorisierungsinformationen eine Priorisierung des Schonend-Lademodus für den Nichtnutzungszeitraum umfassen.

6. Batterielademanagementsystem nach Anspruch 4 oder 5, wobei die Nutzungshistorieinformationen Informationen über einen erwarteten Nutzungsstartzeitpunkt umfassen und die Priorisierungsinformationen eine Priorisierung des Schnell-Lademodus in Abhängigkeit von dem erwarteten Nutzungsstartzeitpunkt umfassen.

7. Batterielademanagementsystem nach einem der Ansprüche 4 bis 6, wobei die Nutzervorgabeinformationen Informationen über einen angeforderten Nutzungsstartzeitpunkt umfassen und die Nutzerendgeräte (4₁, ..., 4ₘ) und/oder die Lademanagementbasis (3) und/oder die Ladesteuereinheiten (2) dafür eingerichtet ist/sind, die Lademodusinformationen und/oder die Ladeparameter-Sollwertinformationen in Abhängigkeit vom angeforderten Nutzungsstartzeitpunkt festzulegen.

8. Batterielademanagementsystem nach einem der Ansprüche 1 bis 7, wobei die jeweilige Ladesteuereinheit (2) zur Erfassung wenigstens eines laderelevanten Batteriezustandsparameters ihrer Batterieeinheit (B₁, ..., Bₙ) und zur Festlegung der Ladeparameter-Sollwertinformationen für die betreffende Batterieeinheit (B₁, ..., Bₙ) in Abhängigkeit von den erfassten Werten des wenigstens einen Batteriezustandsparameters eingerichtet ist.

9. Batterielademanagementsystem nach einem der Ansprüche 1 bis 8, wobei die Ladeparameter-Sollwertinformationen unterschiedliche Ladestrom- und/oder Ladespannungs-Sollwertvorgaben für mindestens fünf unterschiedliche Batterietemperaturbereiche umfassen, wobei die Ladeparameter-Sollwertinformationen unterhalb einer Minimaltemperatur und oberhalb einer Maximaltemperatur den Nicht-Lademodus vorgegeben, für eine an die Minimaltemperatur angrenzende Folge von mindestens zwei Batterietemperaturbereichen einen sukzessiv höheren Ladestrom und/oder eine sukzessiv höhere Ladespannung vorgegeben und für eine an die Maximaltemperatur angrenzende Folge von mindestens zwei Batterietemperaturbereichen einen gleichbleibenden oder sukzessiv geringeren Ladestrom und/oder eine gleichbleibende oder sukzessiv geringere Ladespannung vorgegeben.

10. Batterielademanagementsystem nach einem der Ansprüche 1 bis 9, wobei die Ladeeinstellinformationen und/oder die Nutzervorgabeinformationen wenigstens eine von einer Ziel-Batteriekapazitätsinformation, einer Ziel-Batterieenergieinformation, einer Ziel-Batteriespannungsinformation und einer Ziel-Batterieeinsatzdauerinformation beinhalten.

11. Batterielademanagementverfahren für eine Batterieflotte (1) mit einer Mehrzahl von wiederaufladbaren, kommunikationsfähigen Batterieeinheiten (B₁, ..., Bₙ), die jeweils mit einer Ladesteuereinheit (2) ausgerüstet sind, bei dem
- Ladeeinstellinformationen für die Batterieeinheiten (B₁, ..., Bₙ) von einer Lademanagementbasis (3) übertragen werden,
- die Batterieeinheiten (B₁, ..., Bₙ) mit je einer Ladesteuereinheit (2) ausgerüstet werden,
- eine Mehrzahl von Nutzerendgeräten (4₁, ..., 4ₘ) bereitgestellt werden, von denen batterieladebezogene Nutzervorgabeinformationen übertragen werden,
- eine Kommunikationsverbindung (5) zur Datenübertragung zwischen der Lademanagementbasis (3) einerseits und den Batterieeinheiten (B₁, ..., Bₙ) andererseits und zwischen den Nutzerendgeräten (4₁, ..., 4ₘ) einerseits und der Lademanagementbasis (3) und/oder den Batterieeinheiten (B₁, ..., Bₙ) andererseits bereitgestellt wird,
- die Ladeeinstellinformationen und/oder die Nutzervorgabeinformationen Lademodusinformationen bezüglich einer Mehrzahl unterschiedlicher Lademodi für die Batterieeinheiten (B₁, ..., Bₙ) umfassen,
- die Ladeeinstellinformationen von der Lademanagementbasis (3) und/oder die Nutzervorgabeinformationen von den Nutzerendgeräten (4₁, ..., 4ₘ) über die Kommunikationsverbindung (5) der Ladesteuereinheit (2) in der jeweiligen Batterieeinheit (B₁, ..., Bₙ) zugeführt werden und
- zur Durchführung eines Ladevorgangs für die jeweilige, an ein Ladegerät (8) angekoppelte Batterieeinheit (B₁, ..., Bₙ) von deren Ladesteuereinheit (2) zugehörige Ladeparameter-Sollwertinformationen in Abhängigkeit von den zugeführten Ladeeinstellinformationen und/oder Nutzervorgabeinformationen festgelegt und an das Ladegerät übermittelt werden.

12. Batterielademanagementverfahren nach Anspruch 11, wobei es vom Batterielademanagementsystem nach einem der Ansprüche 1 bis 10 ausgeführt wird.

13. Batterielademanagementverfahren nach Anspruch 12, wobei für die Durchführung eines jeweiligen Ladevorgangs einer der Batterieeinheiten (B₁, ..., Bₙ) durch die zugehörige Ladesteuereinheit (2) die Ladeparameter-Sollwertinformationen in Abhängigkeit von erfassten Istwerten des wenigstens einen laderelevanten Batteriezustandsparameters der Batterieeinheit (B₁, ..., Bₙ) festgelegt und periodisch aktualisiert werden.
